# EUROPÄISCHE PATENTSCHRIFT

(11) **EP 3 288 175 B1**
(45) Veröffentlichungstag und Bekanntmachung des Hinweises auf die Patenterteilung: **14.10.2020**
(21) Anmeldenummer: 17187061.1
(22) Anmeldetag: 21.08.2017
(51) Int. Cl.: H02P 6/18, H02P 6/182

(54) **VERFAHREN ZUR SENSORLOSEN STEUERUNG EINES PMSM MOTORS**
METHOD FOR SENSORLESS CONTROL OF A PMSM MOTOR
PROCÉDÉ DE COMMANDE SANS CAPTEUR D'UN MOTEUR PMSM

(30) Priorität: 22.08.2016 CH 10792016
(43) Veröffentlichungstag der Anmeldung: 28.02.2018
(73) Patentinhaber: maxon international ag, 6072 Sachseln (CH)
(72) Erfinder: Zhao, Chen, 8953 Dietikon (CH)
(74) Vertreter: Grünecker Patent- und Rechtsanwälte PartG mbB

(56) Entgegenhaltungen:
- US-A- 6 163 127
- US-A1- 2005 151 502
- US-A1- 2015 084 575
- G-D ANDREESCU ET AL: "Combined Flux Observer With Signal Injection Enhancement for Wide Speed Range Sensorless Direct Torque Control of IPMSM Drives", IEEE TRANSACTIONS ON ENERGY CONVERSION, IEEE SERVICE CENTER, PISCATAWAY, NJ, US, Bd. 23, Nr. 2, 1. Juni 2008 (2008-06-01), Seiten 393-402, XP011204811, ISSN: 0885-8969
- FERNANDO BRIZ ET AL: "Rotor Position Estimation", IEEE INDUSTRIAL ELECTRONICS MAGAZINE, IEEE, US, Bd. 5, Nr. 2, 1. Juni 2011 (2011-06-01), Seiten 24-36, XP011366661, ISSN: 1932-4529, DOI: 10.1109/MIE.2011.941118

## Beschreibung

### GEBIET DER ERFINDUNG

Die vorliegende Erfindung liegt im Gebiet der Regelung von elektronisch kommutierten Motoren. Sie betrifft ein Verfahren zur sensorlosen Steuerung eines Permanentmagnet-Synchronmaschinen(PMSM)-Motors.

### HINTERGRUND DER ERFINDUNG

PMSM Motoren werden vielfach in Anwendungen, z.B. im medizinischen Bereich, eingesetzt, bei welchen die Dynamik des Motors eine entscheidende Rolle spielt. Eine verlässliche Steuerung des Motors erfordert die präzise Kenntnis der Rotorposition, wofür in herkömmlichen Anwendungen Positionssensoren, z.B. Hallsensoren oder optische Sensoren, eingesetzt werden. Der Einsatz von Sensoren erhöht allerdings die Kosten und die Komplexität, z.B. in der Verkabelung, der Motoren und wirkt sich nachteilig auf die Verlässlichkeit und Robustheit der Antriebe aus.

Aus diesen Gründen wurden in den letzten Jahren verschiedene Verfahren zur sensorlosen Steuerung von PMSM Motoren entwickelt, welche sich hauptsächlich in zwei Kategorien aufteilen und unterschiedliche Vor- und Nachteile in Bezug auf den Motorentyp und/oder die Motorendynamik aufweisen.

In der ersten Kategorie wird die Rotorposition über die Gegen-EMK (elektromotorische Kraft) durch den rotierenden Permanentmagneten bestimmt. Die auf der Gegen-EMK basierenden Methoden sind nicht oder schlecht für Stillstand und niedrige Geschwindigkeiten geeignet, da in diesen Bereichen das Signal der Gegen-EMK verschwindet oder zu klein ist, um ein ausreichendes Signal-Rausch-(S/N)-Verhältnis sicherzustellen.

Die zweite Kategorie umfasst Methoden, welche Anisotropien des Motors ausnützen. Anisotropien können z.B. eine magnetische Schenkligkeit des Rotors oder magnetische Sättigungseffekte im Eisenkern des Stators umfassen. Diese Methoden bieten den Vorteil, dass eine Positionsbestimmung auch bei Stillstand oder niedrigen Geschwindigkeiten möglich ist. Allerdings erfordern diese Methoden eine ausreichende inhärente magnetische Anisotropie, damit ein ausreichendes Signal-Rausch-Verhältnis erreicht werden kann. Die magnetische Schenkligkeit (*L_{q}* > *L_{d}*) kann bei einem asymmetrischen Rotor, z.B. in einem PMSM Motor mit eingebettetem Permanentmagneten, ausgenutzt werden. Bei einem PMSM Motor mit oberflächenmontierten Permanentmagneten ist die Anisotropie hingegen zu klein (*L_{q}*≈*L_{d}*), so dass in der Regel auf Sättigungseffekte zurückgegriffen werden muss. Bei eisenlosen Motoren können Sättigungseffekte wiederum in der Regel nicht ausgenutzt werden.

Bei der Bestimmung der Rotorposition anhand der Anisotropien des Motors werden dem PMSM Motor gewöhnlich Testsignale mit einer Frequenz, welche deutlich über der Grundschwingungsfrequenz des Motors liegen, eingeprägt, was gemeinhin als Signalinjektion bezeichnet wird. Bei der Signalinjektion wird dabei typischerweise zwischen periodisch eingeprägten (diskreten) Testsignalen und kontinuierlich eingeprägten Testsignalen unterschieden.

Ein Beispiel für die Bestimmung der Rotorposition durch die Injektion von periodischen, diskreten Testsignalen stellt das INFORM-Verfahren dar (Indirect flux detection by on-line reactance mesaurement) dar, welche von M. Schroedl entwickelt wurde und z.B. in ETEP Vol. 1, No. 1, January/February 1991, p.47-53 beschrieben wird, und welche für Stillstand sowie kleine Drehzahlen geeignet ist. Beim INFORM-Verfahren werden die Stromanstiege der Phasen aufgrund von bestimmten Test-Spannungsvektoren ausgewertet, um die komplexe Stator-Induktivität in den verschiedenen Raumzeigerrichtungen zu bestimmen. Aus der Stator-Induktivität wird dann die Rotorlage bestimmt. Ein Nachteil dieses Verfahrens sind die hohen auftretenden Ströme beim Anlegen der Spannungsvektoren, welche zu Verzerrungen der Ströme und mit ihnen zu Pendelmomenten führen können.

Die kontinuierlich eingeprägten Testsignale umfassen u.a. rotierende Testsignale oder alternierende Testsignale. Bei den rotierenden Testsignalen wird das hochfrequente Trägersignal im Ständerkoordinatensystem als einen der Grundschwingung überlagerten, rotierenden komplexen Raumzeiger eingeprägt. Vom phasenmodulierten Antwortsignal kann die Information über die Rotorposition gewonnen werden. Bei den alternierenden Testsignalen wird ein hochfrequentes Trägersignal entlang der d- oder q-Achse des erwarteten Rotorkoordinatensystems eingeprägt, und ein positionsabhängiges Antwortsignal aufgrund des Fehlers zwischen der erwarteten und der aktuellen Position des Rotors entlang der orthogonalen Achse gemessen. Die Grösse des Antwortsignals hängt von der Maschinenanisotropie ab, was in der Regel ungünstig für oberflächenmontierte PMSM Motoren ist.

Ein Verfahren zur Bestimmung der Rotorposition ist durch US 2015/0084575 A1 bekannt. Bei einem derartigen Verfahren wird die Geschwindigkeit des Motors bei einer niedrigen Geschwindigkeit mittels Injektion von periodischen, diskreten Testsignalen ermittelt, und bei einer hohen Geschwindigkeit mittels der Gegen-EMK ermittelt. In einem Übergangsbereich zwischen einer ersten Umschaltgeschwindigkeit und einer zweiten Umschaltgeschwindigkeit wird zur Ermittlung der Geschwindigkeit mittels einer Auswahllogik zwischen der Messmethode bei niedrigen Geschwindigkeiten und der Messmethode bei hohen Geschwindigkeiten entschieden.

Zur Bestimmung der Rotorposition im Stillstand ist aus dem Artikel "Combined Flux Observer With Signal Injection Enhancement for Wide Speed Range Sensorless Direct Torque Control of IPMSM Drives" von Andreescu et. al. im Magazin "IEEE Transactions on Energy conversion" Bd. 23 ebenfalls eine Methode nach dem INFORM-Verfahren bekannt, wobei mittels Injektion eines gepulsten Signalmusters die Position minimaler Induktivität des Motors bestimmt wird.

Die bekannten Methoden zur Positionsbestimmung aus dem Stand der Technik setzen somit bestimmte Eigenschaften des Motors, wie z.B. Anisotropien, oder einen bestimmten Zustand, wie z.B. minimale Geschwindigkeit, voraus. Liegt eine dieser Eigenschaften oder Zustände nicht vor, kann die Positionsbestimmung in der Regel nicht durchgeführt werden oder liefert aufgrund des schlechten Signal-Rausch-Verhältnisses unzuverlässige Resultate.

### DARSTELLUNG DER ERFINDUNG

Es ist daher Aufgabe der Erfindung, ein Verfahren und eine Vorrichtung zur sensorlosen Positionsbestimmung eines PMSM Motors bereitzustellen, die den Stand der Technik mindestens teilweise verbessern.

Diese Aufgabe wird durch die Merkmale der unabhängigen Ansprüche 1 und 9 gelöst. Bevorzugte Ausgestaltungen der Erfindung sind in den abhängigen Ansprüchen und in der vorliegenden Offenbarung gegeben.

Die Erfindung betrifft ein Verfahren zur adaptiven sensorlosen Positionsbestimmung eines PMSM Motors, umfassend die Schritte: a. Bestimmen der Rotorposition und der Rotorpolarität mittels diskreter Signalinjektion für den Bereich zwischen Stillstand bis zu niedriger Drehzahl von bis zu 1% der Nenndrehzahl des Motors; b. Bestimmen der Rotorposition mittels kontinuierlicher Signalinjektion bei einer Drehzahl, welche kleiner als eine erste Umschaltdrehzahl ist; c. Bestimmen der Rotorposition mittels Gegen-EMK bei einer Drehzahl, welche grösser als die erste Umschaltdrehzahl ist; wobei zwischen Rotorpositionsbestimmung mittels kontinuierlicher Signalinjektion und Rotorpositionsbestimmung mittels Gegen-EMK mittels einer Motorsteuerung in Abhängigkeit von der Drehzahl umgeschaltet wird; und wobei bei Bewegung des Rotors die Rotorpolarität und/oder die Rotorposition zu einem Zeitpunkt unter Verwendung der Rotorpolarität und/oder der Rotorposition zu einem vorherigen Zeitpunkt überwacht und adjustiert wird.

Im Rahmen dieser Erfindung kann, sofern nicht explizit erwähnt, unter sensorloser Positionsbestimmung sowohl die Bestimmung des Rotorwinkels wie auch die Bestimmung der Rotorpolarität verstanden werden.

Das erfindungsgemässe Verfahren bietet den Vorteil, dass durch die adaptive Kombination der verschiedenen Methoden zur Positionsbestimmung eine zuverlässige und flexible Positionsbestimmung für den ganzen Drehzahlbereich des PMSM Motors bereitgestellt werden kann. Insbesondere für einen Betrieb des PMSM Motors ab Stillstand bis zu sehr niedriger Geschwindigkeit bietet das erfindungsgemässe Verfahren den Vorteil, dass mittels diskreter Signalinjektion ein genauer Wert der Rotorposition und/oder der Rotorpolarität ermittelt werden kann, da u.a. in dieser Phase der Nutzstrom sowie der Stromregler des Motors nicht aktiviert sein müssen. Die so initial durch die diskrete Signalinjektion ermittelte Rotorposition und/oder Rotorpolarität kann dann bei der Positionsbestimmung mittels kontinuierlicher Signalinjektion verwendet werden. Sofern die Abweichung der Rotorpolarität und/oder der Rotorposition eine bestimmte Korrekturschwelle unterschreitet, wird vorzugsweise eine Adjustierung von Null (d.h. keine Korrektur) vorgesehen. Da die Rotorposition und/oder die Rotorpolarität initial durch die diskrete Signalinjektion bestimmt werden kann, steht vorteilhafterweise die gesamte Pulsweitenmodulationsperiode für die Drehmomenterzeugung zur Verfügung, wenn der Motor gestartet wird. Vorzugsweise wird die diskrete Signalinjektion ausgeschaltet, sobald die Positionsbestimmung mittels kontinuierlicher Signalinjektion einsetzt. Die erste Umschaltdrehzahl, bei welcher die Positionsbestimmung von der kontinuierlichen Signalinjektion zur Bestimmung mittels Gegen-EMK umschaltet, ist in der Regel vom Motortypen abhängig und kann bevorzugt in Abhängigkeit von Motorcharakteristika wie z.B. der magnetischen Polzahl, der Wicklungsgeometrie, dem Wicklungsdrahtdurchmesser, dem Wicklungswiderstand oder dem Magnettyp, durch die Motorsteuerung eingestellt werden.

Optional wird zwischen der Positionsbestimmung mittels diskreter Signalinjektion und der Positionsbestimmung mittels kontinuierlicher Signalinjektion mittels der Motorsteuerung bei einer zweiten Umschaltdrehzahl umgeschaltet, wobei die diskrete Signalinjektion bei Stillstand oder einer Drehzahl unter der zweiten Umschaltdrehzahl und die kontinuierliche Signalinjektion bei einer Drehzahl über der zweiten Umschaltdrehzahl angewendet wird. Die zweite Umschaltdrehzahl kann vom Motortypen, bzw. von Motorcharakteristika, abhängen.

Alternativ wird die Positionsbestimmung mittels diskreter Signalinjektion ausgesetzt, sobald initial die Rotorposition und/oder die Rotorpolarität bestimmt sind, und mit der kontinuierlichen Signalinjektion fortgefahren.

In einer bevorzugten Ausgestaltung des Verfahrens wird vor der Rotorpositionsbestimmung ein Kalibrierungsschritt durchgeführt, in welchem eine im Wesentlichen vom Rotormagnetfeld unabhängige Kalibrierungskurve eines von der Motorimpedanz abhängigen Parameters als Funktion der Winkelposition des Statorfeldes gebildet wird und eine bei der Positionsbestimmung ermittelte Parameterkurve durch die Kalibrierungskurve kompensiert wird.

Bevorzugt wird der Kalibrierungsschritt vor der Rotorpositionsbestimmung mittels diskreter Signalinjektion und/oder vor der Rotorpositionsbestimmung mittels kontinuierlicher Signalinjektion durchgeführt. Das Bilden einer im Wesentlichen vom Rotormagnetfeld unabhängigen Kalibrierungskurve bietet u.a. den Vorteil, dass die Kalibrierungskurve auf Messkurven für beliebige Rotorwinkel angewendet werden kann. Das Ausmass der Unabhängigkeit der Kalibrierungskurve vom Rotormagnetfeld ist innerhalb des für den Fachmann bekannten Toleranzrahmens zu verstehen. Da die Kalibrierungskurve von einem von der Motorimpedanz abhängigen Parameter als Funktion der Winkelposition des Statorfeldes gebildet wird, kann die bei der diskreten und/oder kontinuierlichen Signalinjektion ermittelte Motorimpedanz in Abhängigkeit der Winkelposition des Statorfeldes durch die Kalibrierungskurve kalibriert bzw. kompensiert werden. Dadurch können vom Rotormagnetfeld im Wesentlichen unabhängige Werte, wie z.B. Offsets, kompensiert werden, was vorteilhafterweise das Signal-Rausch-Verhältnis der mittels Signalinjektion gemessenen Positionswerte erhöht. Die Winkelposition kann eine absolute, aber auch eine relative Winkelposition sein.

In einer Ausgestaltung des Verfahrens wird die Kalibrierungskurve in einer Nachschlagetabelle in einem nichtvolatilen Datenspeicher, vorzugsweise einem Flash-Speicher, einer Motorsteuerungseinheit hinterlegt.

In der Regel verfügen die Motorsteuerungseinheiten der PMSM Motoren bereits über Memory-Segmente, in welche die Kalibrierungskurve hinterlegt werden kann. Für die Hinterlegung der Kalibrierungskurve müssen vorteilhafterweise daher keine zusätzlichen Einheiten zum PMSM Motor hinzugefügt werden. Die im nichtvolatilen Datenspeicher der Motorsteuerungseinheit hinterlegte Kalibrierungskurve kann bei Bedarf vom Datenspeicher ausgelesen werden.

In einer bevorzugten Ausgestaltung des Verfahrens werden die bei der Rotorpositions- und/oder Rotorpolaritätsbestimmung mittels diskreter Signalinjektion und/oder kontinuierlicher Signalinjektion bestimmten Messwerte durch die Daten aus dem Kalibrierungsschritt korrigiert, wobei die Differenz zwischen der bei der Rotorpositionsbestimmung durch diskrete und/oder kontinuierliche Signalinjektion ermittelten Parameterkurve und der Kalibrierungskurve gebildet wird.

Da die Kalibrierungskurve im Wesentlichen vom Rotormagnetfeld unabhängig ist, kann mit der Differenzbildung im Grunde genommen eine Filterung durchgeführt werden, bei welcher die rotormagnetfeldunabhängigen Komponenten der bei der diskreten und/oder kontinuierlichen Signalinjektion ermittelten Parameterkurve herausgefiltert werden. In der Regel weist die aus der Differenzbildung resultierende Differenzkurve für eine bestimmte Winkelposition die grösste Differenz (zwischen ermittelter Parameterkurve und Kalibrierungskurve) auf, woraus auf den Rotorwinkel geschlossen werden kann. Die Differenzbildung bildet den Vorteil, dass das Signal-Rausch-Verhältnis erhöht werden kann. Auf diese Weise kann der Rotorwinkel auch in Situationen bestimmt werden, in welchen das Signal-Rausch-Verhältnis für die diskrete und/oder kontinuierliche Signalinjektion allein zu tief ist, um eine zuverlässige Positionsbestimmung zu gewährleisten. Ein weiterer Vorteil ist, dass die Differenzbildung mittels Kalibrierungskurve auch auf die Rotorpolaritätsbestimmung bei der diskreten Signalinjektion angewendet werden kann.

In einer Ausgestaltung wird bei der Rotorpositionsbestimmung mittels kontinuierlicher Signalinjektion eine Sampleperiode angewendet, wobei in jeder Sampleperiode eine Rotorpositionsbestimmung durchgeführt und die ermittelte Rotorposition mit der Rotorposition aus der vorhergehenden Sampleperiode verglichen und gegebenenfalls korrigiert wird.

In der Regel wird die Sampleperiode von der Pulsweitenmodulationsfrequenz begrenzt. Bei längeren Sampleperioden bei gleicher Pulsweitenmodulationsfrequenz erhöht sich in der Regel die Genauigkeit der Positionsbestimmung.

Bevorzugt wird die Länge der Sampleperiode derart gewählt, dass sich der Rotorwinkel innerhalb der Sampleperiode nicht mehr als 90° ändert.

Vorteilhafterweise kann so sichergestellt werden, dass zur Überwachung und/oder Korrektur der Rotorpolarität auf die Rotorpolarität und Rotorposition aus der vorhergehenden Sampleperiode zurückgegriffen werden kann.

Die Positionsbestimmung kann optional mit einem Beobachter kombiniert werden, um die Sampleperiode zu verkürzen, was eine schnellere Positionsbestimmung ermöglicht.

In einer Ausgestaltung des Verfahrens ist die erste Umschaltdrehzahl kleiner als 5% der Nenndrehzahl des Motors, bevorzugt zwischen 0.1% und 3%, besonders bevorzugt zwischen 0.2% und 3%, der Nenndrehzahl des Motors.

In einer Ausgestaltung des Verfahrens entspricht die Frequenz der kontinuierlichen Signalinjektion im Wesentlichen der Pulsweitenmodulationsfrequenz oder alternativ der halben Pulsweitenmodulationsfrequenz der Motorsteuerung.

Bevorzugt liegt die Frequenz der kontinuierlichen Signalinjektion in einem Bereich zwischen 50-200 kHz.

Die Erfindung betrifft weiter ein PMSM Motor zum Betrieb mit dem erfindungsgemässen Verfahren, umfassend eine Motorsteuerung zur Umschaltung zwischen Rotorpositionsbestimmung durch diskrete und/oder kontinuierliche Signalinjektion und/oder Rotorpositionsbestimmung durch Gegen-EMK; ein nichtvolatiler Speicher zum Abspeichern und Ablesen von Rotorpositions- und/oder Rotorpolaritätsdaten und/oder Kalibrierungsdaten zur Bildung einer Kalibrierungskurve; und eine Verarbeitungseinheit zur Differenzbildung von gemessener Parameterkurve und der Kalibrierungskurve.

In einer bevorzugten Ausgestaltung ist der PMSM Motor mit einem Verfahren gemäss der vorliegenden Beschreibung kalibriert.

In einer Ausgestaltung weist der PMSM Motor eine eisenlose Wicklung auf.

PMSM Motoren mit eisenlosen bzw. nutenlosen Wicklungen weisen verschiedene Vorteile gegenüber Wicklungen mit Eisenkernen auf, wie z.B. kein magnetischer Rastmoment, hoher Wirkungsgrad, kleine Induktivität etc. Die Eigenschaften solcher Motoren erfordern aber in der Regel alternative Methoden zur Regelung des Motors. Zum Beispiel ist in Bezug auf die Positionsbestimmung die Anisotropie bei diesen Motoren klein und bekannte Methoden basierend auf Sättigungseffekten nicht oder nur beschränkt anwendbar. Methoden zur Positionsbestimmung mittels diskreter und/oder kontinuierlicher Signalinjektion, welche auf der Anisotropie basieren, weisen somit für eisenlose bzw. nutenlose PMSM Motoren in der Regel ein kleines Signal-Rausch-Verhältnis auf, so dass eine zuverlässige Positionsbestimmung oft nicht gewährleistet ist. Insbesondere die Verwendung der Kalibrierungskurve bietet den Vorteil, dass das Signal-Rausch-Verhältnis auch bei eisenlosen PMSM Motoren derart erhöht werden kann, dass die Rotorposition und/oder Rotorpolarität zuverlässig bestimmt werden kann.

In einer Ausgestaltung ist der PMSM Motor ein S-PMSM Motor mit oberflächenmontierten Permanentmagneten.

Die Positionsbestimmung basierend auf der Anisotropie ist für S-PMSM aufgrund der kleinen Anisotropie in der Regel unmöglich oder mit grossem Aufwand verbunden. Insbesondere die Verwendung der Kalibrierungskurve bietet hier den Vorteil, dass das Signal-Rausch-Verhältnis auch bei S-PMSM Motoren derart erhöht werden kann, dass die Rotorposition und/oder Rotorpolarität zuverlässig bestimmt werden kann.

### LISTE DER FIGUREN

Die Erfindung soll nachfolgend anhand von Ausführungsbeispielen im Zusammenhang mit den Figuren und der dazugehörigen Beschreibung näher erläutert werden. Es zeigen:
- Fig. 1: eine schematische Darstellung eines Ausführungsbeispiels des erfindungsgemässen Verfahrens;
- Fig. 2: eine Darstellung einer Kalibrierungskurve und einer gemessenen Parameterkurve;
- Fig. 3: eine Darstellung einer Differenzkurve.

### BESCHREIBUNG EXEMPLARISCHER AUSFÜHRUNGSFORMEN

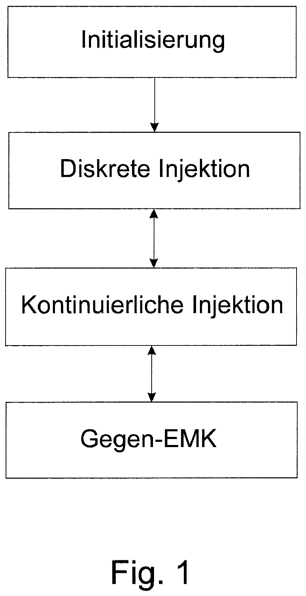

Figur 1 zeigt eine schematische Darstellung eines Ausführungsbeispiels des erfindungsgemässen Verfahrens zur Positionsbestimmung eines PMSM Motors in Form eines Flussdiagramms. In einem ersten Initialisierungsschritt werden die Systemparameter bestimmt. Im gezeigten Ausführungsbeispiel wird im Initialisierungsschritt die Kalibrierungskurve ermittelt. Die Kalibrierungskurve wird in einem nichtvolatilen Datenspeicher des Motors bzw. der Motorsteuerungseinheit abgelegt. Bei Stillstand des Motors wird in einem nächsten Schritt durch diskrete Signalinjektion die initiale Rotorposition und die initiale Rotorpolarität bestimmt. Bevorzugt wird dies durch Anlegen von geeigneten Testsignalen in verschiedene Richtungen erreicht, wie z.B. beim INFORM-Verfahren. Die durch die diskrete Signalinjektion ermittelten Werte werden unter Verwendung der im nichtvolatilen Datenspeicher abgelegten Kalibrierungskurve verarbeitet und daraus die Rotorposition und die Rotorpolarität bestimmt. Die diskrete Signalinjektion kann bei Stillstand und bei sehr niedrigen Drehzahlen angewendet werden, vorzugsweise in einem Bereich von 0.1-1% der Nenndrehzahl des Motors. Ist die initiale Rotorposition sowie die Rotorpolarität bekannt, wird die diskrete Signalinjektion ausgesetzt und die Positionsbestimmung mittels kontinuierlicher Signalinjektion durchgeführt. Die kontinuierliche Signalinjektion kann z.B. mit einem rotierenden Raumzeiger durchgeführt werden. Bei der Positionsbestimmung wird die aktuelle Position mit Berücksichtigung der Position an den vorherigen Zeitpunkten bestimmt bzw. adjustiert. Dazu können Sampleperioden eingeführt werden, so dass die Positionsbestimmung in einer bestimmten Sampleperiode auf die Werte aus der vorhergehenden Sampleperiode verwendet. Auch bei der kontinuierlichen Signalinjektion kann die Kalibrierungskurve verwendet werden, um die durch die kontinuierliche Signalinjektion ermittelten Werte zu verarbeiten und daraus die Rotorposition zu bestimmen. Sobald die Drehzahl des Rotors eine erste Umschaltdrehzahl erreicht, wird auf die Positionsbestimmung mittels der Gegen-EMK umgeschaltet, wobei die erste Umschaltdrehzahl eine Drehzahl ist, bei welcher das Signal der Gegen-EMK ausreicht, um ein Signal-Rausch-Verhältnis sicherzustellen, welche eine zuverlässige Positionsbestimmung ermöglicht. Wie durch die Doppelpfeile angedeutet, kann je nach Bedarf, z.B. in Abhängigkeit der Drehzahl, zwischen den verschiedenen Positionsbestimmungsmethoden umgeschaltet werden.

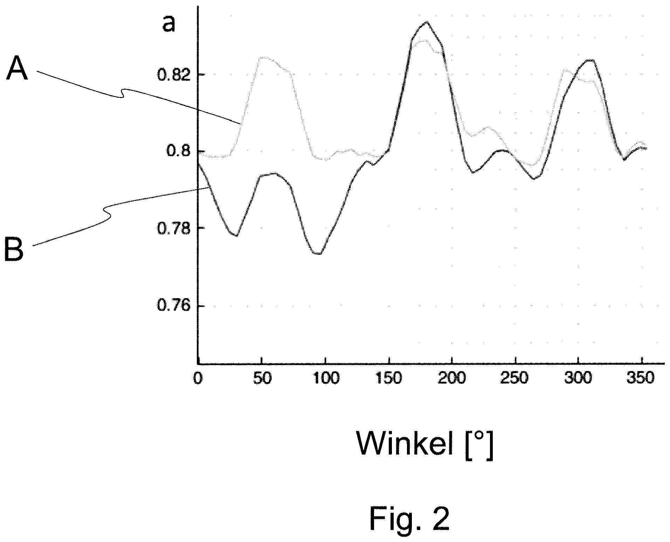

Eine Kalibrierungskurve A ist in Figur 2 gezeigt. In Figur 2 ist weiter eine gemessene Parameterkurve B gezeigt. Die Parameterkurve B kann z.B. bei der diskreten Signalinjektion oder bei der kontinuierlichen Signalinjektion aufgenommen worden sein. Bei Messung der Parameterkurve B ist die Rotorposition unbekannt. Bereits aus den zwei Kurven in Figur 2 ist ersichtlich, dass die Parameterkurve B im Vergleich zur Kalibrierungskurve A eine starke Abhängigkeit vom Rotormagnetfeld zwischen ca. 25° und ca. 95° zeigt.

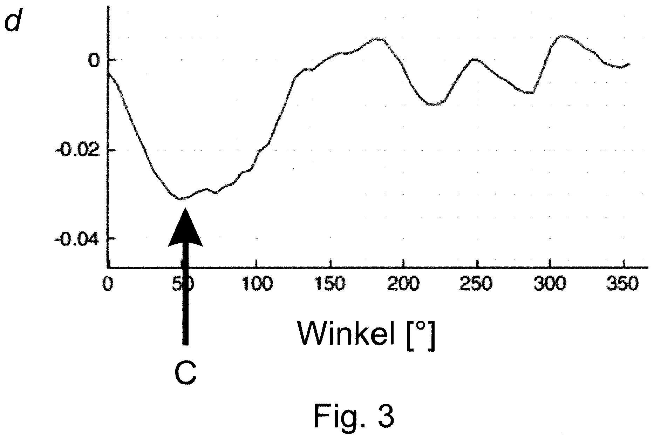

Dies wird verdeutlicht, wenn die Differenz d zwischen der Parameterkurve B und der Kalibrierungskurve A gebildet wird. Die resultierende Differenzkurve ist in Figur 3 gezeigt. Bei dem Winkel (siehe Pfeil C), bei welchem die Differenz *d* maximal ist, ist die Abhängigkeit vom Rotormagnetfeld am grössten. Dieser Winkel ist daher der Rotorwinkel, da bei diesem Winkel der Einfluss des Rotormagnetfelds am stärksten ist.

## Patentansprüche

1. Verfahren zur adaptiven sensorlosen Positionsbestimmung eines PMSM Motors, umfassend die Schritte:
a. Bestimmen der Rotorposition und der Rotorpolarität mittels diskreter Signalinjektion für den Bereich zwischen Stillstand bis zu niedriger Drehzahl von bis zu 1% der Nenndrehzahl des Motors;
b. Bestimmen der Rotorposition mittels kontinuierlicher Signalinjektion bei einer Drehzahl, welche kleiner als eine erste Umschaltdrehzahl ist;
c. Bestimmen der Rotorposition mittels Gegen-EMK bei einer Drehzahl, welche grösser als die erste Umschaltdrehzahl ist;
wobei zwischen Rotorpositionsbestimmung mittels kontinuierlicher Signalinjektion und Rotorpositionsbestimmung mittels Gegen-EMK mittels einer Motorsteuerung in Abhängigkeit von der Drehzahl umgeschaltet wird; und wobei bei Bewegung des Rotors die Rotorpolarität und/oder die Rotorposition zu einem Zeitpunkt unter Verwendung der Rotorpolarität und/oder der Rotorposition zu einem vorherigen Zeitpunkt überwacht und adjustiert wird.

2. Verfahren nach Anspruch 1, **dadurch gekennzeichnet, dass** vor der Rotorpositionsbestimmung ein Kalibrierungsschritt durchgeführt wird, in welchem eine im Wesentlichen vom Rotormagnetfeld unabhängige Kalibrierungskurve eines von der Motorimpedanz abhängigen Parameters als Funktion der Winkelposition des Statorfeldes gebildet wird und eine bei der Positionsbestimmung ermittelte Parameterkurve durch die Kalibrierungskurve kompensiert wird.

3. Verfahren nach Anspruch 2, **dadurch gekennzeichnet, dass** die Kalibrierungskurve in einer Nachschlagetabelle in einem nichtvolatilen Datenspeicher, vorzugsweise einem Flash-Speicher, einer Motorsteuerungseinheit hinterlegt wird.

4. Verfahren nach Anspruch 2 oder 3, **dadurch gekennzeichnet, dass** die bei der Rotorpositions- und/oder Rotorpolaritätsbestimmung mittels diskreter Signalinjektion und/oder kontinuierlicher Signalinjektion bestimmten Messwerte durch die Daten aus dem Kalibrierungsschritt korrigiert werden, wobei die Differenz zwischen der bei der Rotorpositionsbestimmung durch diskrete und/oder kontinuierliche Signalinjektion ermittelten Parameterkurve und der Kalibrierungskurve gebildet wird.

5. Verfahren nach einem der Ansprüche 1 bis 4, **dadurch gekennzeichnet, dass** bei der Rotorpositionsbestimmung mittels kontinuierlicher Signalinjektion eine Sampleperiode angewendet wird, wobei in jeder Sampleperiode eine Rotorpositionsbestimmung durchgeführt und die ermittelte Rotorposition mit der Rotorposition aus der vorhergehenden Sampleperiode verglichen und gegebenenfalls korrigiert wird.

6. Verfahren nach Anspruch 5, **dadurch gekennzeichnet, dass** die Länge der Sampleperiode derart gewählt wird, dass sich der Rotorwinkel innerhalb der Sampleperiode nicht mehr als 90° ändert.

7. Verfahren nach einem der Ansprüche 1 bis 6, **dadurch gekennzeichnet, dass** die erste Umschaltdrehzahl kleiner als 5%, bevorzugt zwischen 0.1% und 3%, besonders bevorzugt zwischen 0.2% und 3%, der Nenndrehzahl des Motors ist.

8. Verfahren nach einem der Ansprüche 1 bis 7, **dadurch gekennzeichnet**, dassdie Frequenz der kontinuierlichen Signalinjektion im Wesentlichen der Pulsweitenmodulationsfrequenz oder der halben Pulsweitenmodulationsfrequenz der Motorsteuerung entspricht.

9. Ein PMSM Motor zum Betrieb mit einem Verfahren nach einem der Ansprüche 1 bis 8, umfassend eine Motorsteuerung zur Umschaltung zwischen Rotorpositionsbestimmung durch diskrete und/oder kontinuierliche Signalinjektion und/oder Rotorpositionsbestimmung durch Gegen-EMK; ein nichtvolatiler Speicher zum Abspeichern und Ablesen von Rotorpositions- und/oder Rotorpolaritätsdaten und/oder Kalibrierungsdaten zur Bildung einer Kalibrierungskurve; und eine Verarbeitungseinheit zur Differenzbildung von gemessener Parameterkurve und der Kalibrierungskurve.

10. Ein PMSM Motor nach Anspruch 9, kalibriert mit einem Verfahren nach einem der Ansprüche 2 bis 4.

11. Ein PMSM Motor nach Anspruch 9 oder 10, **dadurch gekennzeichnet, dass** der PMSM Motor eine eisenlose Wicklung aufweist.

12. Ein PMSM Motor nach einem der Ansprüche 9 bis 11, **dadurch gekennzeichnet, dass** der PMSM Motor ein S-PMSM Motor mit oberflächenmontierten Permanentmagneten ist.

## Claims

1. A method for adaptive sensor-free determination of the position of a PMSM motor, comprising the following steps:
a. determining the rotor position and the rotor polarity by means of discrete signal injection for the range between standstill up to low rotational speed of up to 1% of the nominal speed of the motor;
b. determining the rotor position by means of continuous signal injection at a rotational speed that is lower than a first changeover speed;
c. determining the rotor position by means of back EMF at a rotational speed that is higher than the first changeover speed;
wherein by means of a motor control system, dependent on the rotational speed, a switch is made between rotor position determination by continuous signal injection and rotor position determination by back EMF; and wherein during movement of the rotor, the rotor polarity and/or the rotor position are/is monitored and adjusted at a point in time by using the rotor polarity and/or the rotor position at a previous point in time.

2. The method according to Claim 1, **characterized in that** prior to the rotor position determination, a calibration step is carried out in which a calibration curve of a parameter depending on the motor impedance is essentially independent of the rotor magnetic field, and is generated as a function of the angular position of the stator field, and in which a parameter curve determined during the position determination is compensated by the calibration curve.

3. The method according to Claim 2, **characterized in that** the calibration curve is stored in a lookup table in a nonvolatile data memory, preferably a flash memory, of a motor control unit.

4. The method according to Claim 2 or 3, **characterized in that** the measured values determined in the rotor position and/or rotor polarity determination by discrete signal injection and/or continuous signal injection are corrected using the data from the calibration step, wherein the difference is generated between the parameter curve and the calibration curve determined during the rotor position determination by discrete and/or continuous signal injection.

5. The method according to one of Claims 1 to 4, **characterized in that** a sample period is used in the rotor position determination by continuous signal injection, wherein a rotor position determination is carried out in each sample period, and the determined rotor position is compared to the rotor position from the preceding sample period and corrected if necessary.

6. The method according to Claim 5, **characterized in that** the length of the sample period is selected in such a way that the rotor angle does not change by more than 90° during the sample period.

7. The method according to one of Claims 1 to 6, **characterized in that** the first changeover speed is less than 5%, preferably between 0.1% and 3%, particularly preferably between 0.2% and 3%, of the nominal speed of the motor.

8. The method according to one of Claims 1 to 7, **characterized in that** the frequency of the continuous signal injection essentially corresponds to the pulse width modulation frequency, or to one-half the pulse width modulation frequency, of the motor control system.

9. A PMSM motor for operation by a method according to one of Claims 1 to 8, comprising a motor control system for switching between rotor position determination by discrete and/or continuous signal injection and/or rotor position determination by back EMF; a nonvolatile memory for storing and reading out rotor position and/or rotor polarity data, and/or calibration data for forming a calibration curve; and a processing unit for generating a difference between the measured parameter curve and the calibration curve.

10. The PMSM motor according to Claim 9, which is calibrated by a method according to one of Claims 2 to 4.

11. The PMSM motor according to Claim 9 or 10, **characterized in that** the PMSM motor has an ironless winding.

12. The PMSM motor according to one of Claims 9 to 11, **characterized in that** the PMSM motor is an S-PMSM motor having surface-mounted permanent magnets.

## Revendications

1. Procédé de détermination adaptative, sans capteur, de la position d'un moteur synchrone à aimants permanents (PMSM), comprenant les étapes consistant à :
a. déterminer la position de rotor et la polarité de rotor au moyen d'une injection discrète de signal pour la plage comprise entre l'arrêt et un faible régime pouvant atteindre 1 % du régime nominal du moteur ;
b. déterminer la position de rotor au moyen d'une injection continue de signal pour un régime inférieur à un premier régime de permutation ;
c. déterminer la position de rotor au moyen de la force contre-électromotrice pour un régime supérieur au premier régime de permutation ;
dans lequel une permutation s'effectue, au moyen d'une commande de moteur et en fonction du régime, entre une détermination de position de rotor au moyen d'une injection continue de signal et une détermination de position de rotor au moyen de la force contre-électromotrice ; et dans lequel, lorsque le rotor est en mouvement, la polarité de rotor et/ou la position de rotor est/sont surveillée(s) et ajustée(s) à un instant donné en utilisant la polarité de rotor et/ou la position de rotor à un instant précédent.

2. Procédé selon la revendication 1, **caractérisé en ce qu'**une étape d'étalonnage, au cours de laquelle une courbe d'étalonnage, essentiellement indépendante du champ magnétique rotorique, d'un paramètre dépendant de l'impédance de moteur est calculée en tant que fonction de la position angulaire du champ statorique, est mise en œuvre avant la détermination de position de rotor et une courbe de paramètres établie lors de la détermination de position est compensée grâce à la courbe d'étalonnage.

3. Procédé selon la revendication 2, **caractérisé en ce que** la courbe d'étalonnage est stockée dans une table de référence au sein d'une mémoire de données non volatile, de manière préférée une mémoire flash, d'une unité de commande de moteur.

4. Procédé selon la revendication 2 ou 3, **caractérisé en ce que** les valeurs de mesure, déterminées lors de la détermination de position de rotor et/ou de polarité de rotor au moyen d'une injection discrète de signal et/ou d'une injection continue de signal, sont corrigées grâce aux données issues de l'étape d'étalonnage, dans lequel une différence est calculée entre la courbe de paramètres, déterminée lors de la détermination de position de rotor par injection discrète et/ou continue de signal, et la courbe d'étalonnage.

5. Procédé selon l'une quelconque des revendications 1 à 4, **caractérisé en ce qu'**une période d'échantillonnage est utilisée lors de la détermination de position de rotor au moyen d'une injection continue de signal, dans lequel une détermination de position de rotor est mise en œuvre pendant chaque période d'échantillonnage et la position de rotor déterminée est comparée avec la position de rotor issue de la période d'échantillonnage précédente et est éventuellement corrigée.

6. Procédé selon la revendication 5, **caractérisé en ce que** la longueur de la période d'échantillonnage est choisie de telle manière que l'angle de rotor ne change pas de plus de 90° pendant la période d'échantillonnage.

7. Procédé selon l'une quelconque des revendications 1 à 6, **caractérisé en ce que** le premier régime de permutation est inférieure à 5 %, de manière préférée compris entre 0,1 % et 3 %, de manière particulièrement préférée compris entre 0,2 % et 3 %, du régime nominal du moteur.

8. Procédé selon l'une quelconque des revendications 1 à 7, **caractérisé en ce que** la fréquence de l'injection continue de signal correspond essentiellement à la fréquence de modulation de largeur d'impulsion ou à la moitié de la fréquence de modulation de largeur d'impulsion de la commande de moteur.

9. Moteur PMSM fonctionnant avec un procédé selon l'une quelconque des revendications 1 à 8, comprenant une commande de moteur permettant de permuter entre une détermination de position de rotor par injection discrète et/ou continue de signal et/ou une détermination de position de rotor grâce à la force contre-électromotrice ; une mémoire non volatile permettant de stocker et lire des données de position de rotor et/ou de polarité de rotor et/ou des données d'étalonnage permettant de calculer une courbe d'étalonnage ; et une unité de traitement permettant de calculer une différence entre la courbe de paramètres mesurée et la courbe d'étalonnage.

10. Moteur PMSM selon la revendication 9, étalonné au moyen d'un procédé selon l'une quelconque des revendications 2 à 4.

11. Moteur PMSM selon la revendication 9 ou 10, **caractérisé en ce que** le moteur PMSM présente un enroulement sans fer.

12. Moteur PMSM selon l'une quelconque des revendications 9 à 11, **caractérisé en ce que** le moteur PMSM est un moteur synchrone à aimants permanents en surface (S-PMSM).
